(19) **Europäisches Patentamt**
**European Patent Office**
**Office européen des brevets**

(11) **EP 4 730 104 A1**

(12) **EUROPEAN PATENT APPLICATION**

(43) Date of publication:
**22.04.2026 Bulletin 2026/17**

(21) Application number: **24306730.3**

(22) Date of filing: **17.10.2024**

(51) International Patent Classification (IPC):
**G06F 7/72** *(2006.01)* **H04L 9/32** *(2006.01)*

(52) Cooperative Patent Classification (CPC):
**G06F 7/725; H04L 9/3252;** G06F 2207/7295;
H04L 9/3066

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **THALES DIS FRANCE SAS**
**92190 Meudon (FR)**

(72) Inventors:
- **SINARDI, Guntur**
  **Singapore 506854 (SG)**
- **ALIKHANI, Nima**
  **Singapore 533875 (SG)**

(74) Representative: **Bricks, Amélie**
**Thales Dis France SAS**
**Intellectual Property Department**
**6, rue de la Verrerie**
**92190 Meudon (FR)**

(54) **VERIFICATION OF AN ECDSA SIGNATURE**

(57)   The invention provides a method for verifying an ECDSA signature. A point R is defined by u1*G+u2*Q, G being a base point, Q being a public key point, u1 and u2 are scalar expressed as a series of bits u1[k] and u2[k], and the method comprises:
- determining (202) coordinates for G, Q and G+Q with a common initial value $Z_{initial}$;
- initializing (204) a first scalar variable $\lambda$ to 1;
- initializing (204) an accumulating variable and iterating the following steps for k varying between 1 and n-2 :
- updating (209) the accumulating variable by applying a function to a previous value of the accumulating variable, the function being selected based on u1[k] and u2[k] ;
- updating (210) $\lambda$ so that a current value of the Z coordinate of the accumulating variable is equal to $Z_{intiial}$ multiplied by the first scalar variable $\lambda$.

[Fig. 2]

EP 4 730 104 A1

**Description**

This invention is related to the field of cryptography, in particular of cryptography based on Elliptic Curve Digital Signature Algorithm, ECDSA.

The invention is useful in particular to secure communications based on digital signatures.

ECDSA is a well known method defining a signature generation algorithm, used for signing a message on a transmitter side, and a signature verification algorithm used for verifying the signed message on the received side.

ECDSA enables to reduce, for a given level of security, the size of the cryptographic keys used for signing and verifying the message, compared to other methods such as RSA, for the same level of security. However, some of the operations that need to be performed in an ECDSA cryptographic system are involving a high computational cost.

In particular, the ECDSA signature verification algorithm involves a double point multiplication, which is the performance critical operation of the algorithm.

This operation can be noted as follows:

$$R = (x_R, y_R) = u1.G + u2.Q;$$

in which G is the generator or base point of prime order of the elliptic curve;

Q is the public key curve point obtained by multiplying the base point G by a scalar

d, which is the corresponding private key;

u1 and u2 are scalar, coded as a series of bits, that are derived from the signature, which is a pair (r,s), and from the message m; and

R is the result of the double point multiplication operation, which is further used during the signature verification process.

The double point multiplication is generally calculated using a double-and-add method, which is based on the two following point operations: regular Jacobian addition and doubling applied to each bit of u1 and u2.

These point operations are described in section 2.1 of the document "Scalar Multiplication on Weierstrass Elliptic Curves from Co-Z Arithmetic", Goundar et Al, Journal of Cryptographic Engineering Vol. 1 Num. 2, 2011.

As indicated in this document, the Jacobian addition of two different points involves a computational cost of eleven field multiplications and five field squaring, and the doubling of a point involves a computational cost of ten multiplications.

Therefore, the double-and-add method involves an average computational cost of 19.75 multiplications per bit of u1 and u2.

This computational cost is high and makes the ECDSA signature verification slow.

There is therefore a need to reduce the computational cost of the ECDSA signature verification, in particular of the double point multiplication used to calculate R.

The invention aims at improving the situation.

A first aspect of the invention concerns a method for verifying an ECDSA signature of a message in a cryptographic system based on an elliptic curve, the method comprising determining a point R on the elliptic curve, the point R being defined by u1*G+u2*Q, wherein G is a base point of the elliptic curve, Q is a public key point, u1 and u2 are scalar determined based on the ECDSA signature and the message, wherein u1 is expressed as a series of n bits u1[k] and u2 is expressed as a series of n bits u2[k] of index k, index k varying between 0 and n-1, wherein determining the point R comprises the following steps:

- determining Jacobian coordinates for G, Q and G+Q with a common initial value $Z_{initial}$ of a Z coordinate;
- initializing a first scalar variable $\lambda$ to 1;
- initializing an accumulating variable as a point of the elliptic curve being G, Q or G+Q;

and iterating the following steps for an index k comprised between 1 and n-2 :

- updating the accumulating variable by applying a function to a previous value of the accumulating variable obtained during a previous iteration, the function being selected based on u1[k] and u2[k] among a set of predefined functions comprising at least one Co-Z function;
- updating the first scalar variable $\lambda$ so that a current value of the Z coordinate of the accumulating variable is equal to the common initial value $Z_{intiial}$ multiplied by the first scalar variable;
- incrementing k by 1.

Therefore, the invention enables to use Co-Z functions for determining R, which reduces the computational cost associated with the calculation of R. To maintain a common Z coordinate, the first scalar variable $\lambda$ is updated after each operation, which enables to avoid updating G, Q and G+Q after each iteration.

According to some embodiments, the set of predefined functions may comprise one or several of the following functions:

- a double function without update, arranged for receiving a point P as input and to output 2*P on the elliptic curve;
- a double function with update, arranged for receiving a point P as input and to output 2*P on the elliptic curve and to output a second scalar variable AZ4 equal to $a*Z_{new}^4$, wherein a is a parameter of the elliptic curve and $Z_{new}$ is a Z coordinate of 2*P;
- a double and add function without update, arranged for receiving a first point P1 and a second point P2, and to output 2*P1 + P2 on the elliptic curve;
- a double and add function with update, arranged for receiving a first point P1 and a second point P2, and to output 2*P1 + P2 and P2' on the elliptic curve, P2' being the same point as P2 on the elliptic curve and having the same Z coordinate as 2*P1+P2.

These functions enable to update, bit by bit, the accumulating variable, until R is calculated. Allowing to select a function with or without update enables to optimize the calculations based on the values of u1 and u2, which enables to reduce the computational cost of R.

As a complement, if u1[k] and u2[k] are equal to 0 then the selected function may be the double function with update or the double function without update, and else, the selected function is the double and add function with update or the double function without update.

This enables to select the function to be used to update the accumulating variable, based on simple comparisons.

Still in complement, if u1[k] and u2[k] are equal to 0 and if u1[k+1] and u2[k+1] are also equal to 0, then the selected function may be the double function with update.

This enables to calculate an updated value of the second scalar variable AZ4 during execution of the double function, as the second scalar variable AZ4 is then used in the next operation for doubling again the accumulating variable. This enables to reduce the computational cost of the signature verification.

Alternatively or in complement, if one of u1[k] and u2[k] at least is different from 0, if u1[k] is equal to u1[k+1] and if u2[k] is equal to u2[k+1], then the selected function may be the double and add function with update.

This enables to obtain an updated next point variable with the same Z coordinate as the accumulating variable, during execution of the selected function. It avoids the need to update the next point variable based on an additional update function and therefore reduces the computational cost associated with the signature verification.

According to some embodiments, at each iteration of index k, the method may comprise, before incrementing k by 1, determining a next point variable based on u1[k+1] and u2[k+1]. The accumulating variable may be determined by applying the selected function to the previous value of the accumulating variable and to the next point variable determined at the previous iteration.

Therefore, the next point variable enables to prepare and facilitate the execution of the function that is selected at the next iteration. The next point variable may be the variable Next described in what follows. In some cases however, when u1[k+1] and u2[k+1] are (0;0), the next point variable is the variable AZ4 described in what follows.

In complement, determining the next point variable based on u1[k+1] and u2[k+1] may comprise, if at least one of u1[k+1] and u2[k+1] is different from 0, selecting a next point among at least G, Q and G+Q, and updating the next point based on the first scalar variable λ, so the Z coordinate of the next point is equal to the common initial value $Z_{intiial}$ multiplied by the first scalar variable λ and the next point variable is the updated next point.

Therefore, at each iteration, only the next point to be added is updated based on the first scalar variable λ. This avoids the need to update G, Q and G+Q with a current value $Z_{new}$ of the Z coordinate for each iteration, and therefore reduces the computational cost associated with the signature verification.

Alternatively or in complement, if u1[k+1] and u2[k+1] are both equal to 0, then the next point variable may comprise a second scalar variable AZ4 equal to $a*Z_{new}^4$, wherein a is a parameter of the elliptic curve and $Z_{new}$ is calculated by multiplying the initial common value $Z_{initial}$ by the first scalar variable λ.

This value is used by the double function to update the accumulating variable so its calculation enables to anticipate the use of the second scalar variable at the next iteration. The second scalar variable AZ4 can advantageously be stored in a dedicated register.

Still alternatively or in complement, if u1[k+1]=u1[k] and u2[k+1]=u2[k], then the next point variable is output by the function selected based on u1[k] and u2[k].

This enables to update the next point variable when it remains the same during two consecutive iterations, during execution of the function, which enables to reduce the computational cost associated with the signature verification.

According to some embodiments, the method may further comprise storing the initial common value $Z_{initial}$ in a backup register.

This enables to facilitate the calculation of the current value $Z_{new}$ of the Z coordinate, by multiplying the initial common value $Z_{initial}$ stored in the register by the first scalar variable λ.

A second aspect of the invention concerns a computer program comprising instructions arranged for implementing the method according to the first aspect of the invention, when said instructions are executed by a processor.

A third aspect of the invention concerns a verification module comprising an interface arranged for receiving a message and an ECDSA signature, and a processor configured for determining a point R on an elliptic curve, the point R being defined by u1*G+u2*Q, wherein G is a base point of the elliptic curve, Q is a public key point, u1 and u2 are scalar determined based on the ECDSA signature and the message, wherein u1 is expressed as a series of n bits u1[k] of index k and u2 is expressed as a series of n bits u2[k] of index k, k varying between 0 and n-1, wherein, in order to determine the point R comprises, the processor is configured for:

- determining Jacobian coordinates for G, Q and G+Q with a common initial value $Z_{initial}$ of a Z coordinate;

- initializing a first scalar variable $\lambda$ to 1;
- initializing an accumulating variable as a point of the elliptic curve being G, Q or G+Q;

and iterating the following steps for an index k comprised between 1 and n-2:

- updating the accumulating variable by applying a function to a previous value of the accumulating variable obtained during a previous iteration, the function being selected based on u1[k] and u2[k] among a set of predefined functions comprising at least one Co-Z function;
- updating the first scalar variable $\lambda$ so that a current value of the Z coordinate of the accumulating variable is equal to the common initial value $Z_{intiial}$ multiplied by the first scalar variable;
- incrementing k by 1.

A fourth aspect of the invention concerns a cryptographic system comprising a receiver and a transmitter, wherein the transmitter comprises a signature generation module, configured for receiving a message and for generating an ECDSA signature based on the message, wherein the transmitter is configured to transmit the message and the generated ECDSA signature to the receiver, and wherein the receiver comprises a verification module according to the third aspect of the invention.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

Brief description of the drawings:

[Fig. 1] shows a cryptographic system, according to some embodiments of the invention;
[Fig. 2] illustrates the steps of a method for verifying a digital signature based on ECDSA, according to some embodiments of the invention;
[Fig. 3] illustrates the structure of a verification module according to some embodiments of the invention.

Detailed description

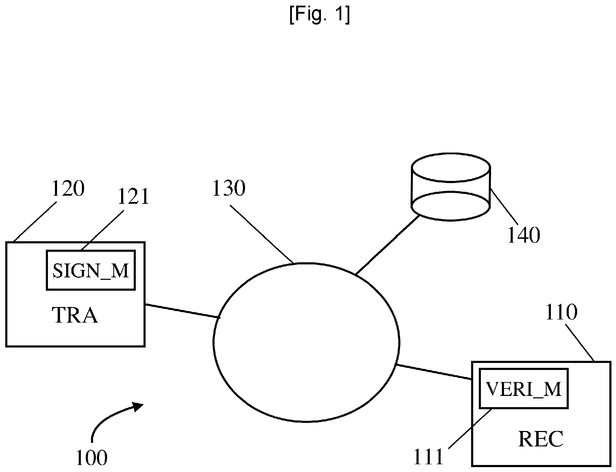

Figure 1 shows an ECDSA cryptographic system 100 according to some embodiments of the invention.

The ECDSA cryptographic system 100 comprises a receiver 110 and a transmitter 120. The receiver 110 and the transmitter 110 can be devices comprising communication means that enable them to communicate together via a communication network 130, which can be an extended network such as an IP network for example.

The transmitter 120 comprises a signature generation module 121 that is configured to sign a message to be transmitted to the receiver 110, based on a private key of the transmitter, and using the ECDSA signature generation algorithm.

The receiver 110 comprises a signature verification module 111 according to some embodiments of the invention, that is configured to verify a signature transmitted with a message from the transmitter 120, based on a public key of the transmitter 120 and using the ECDSA signature verification method according to the invention.

The public key of the transmitter 120 can be stored in a memory of the receiver 110 or in a public registry 140 that can be accessed via the communications network 130.

The ECDSA cryptographic system is based on an Elliptic Curve, EC, for example in Weierstrass form, which can be generally defined as :

$$y^2 = x^3 + ax + b,$$

a and b being fixed values defined the EC, with the following discriminant D, which is different from 0:

$$D = -16\ (4a^3 + 27b^2).$$

According to EC cryptography, an ECDSA cryptographic system is based on the algebraic structure of the elliptic curve over a finite field, which can be a prime field or a binary field.

A base point G of prime order n is defined as a group generator, so that for every point of the group P, there is a scalar d1 such that P=d1.G, "." referring to a point multiplication. n is therefore a prime integer.

Point operations, which can be operated on points of the group, are defined such as point addition, point negation, point doubling and point multiplication. Such principles are well known and are not further described in the present description.

The point multiplication corresponds to a repeated point addition, such as, for example, 3P=P+P+P.

Such a cryptographic system relies on the fact that an EC point multiplication is a one-way operation, and that it is extremely difficult to determine the scalar multiplier d1, even knowing P and G. This property is called ECDLP, for EC Discrete Logarithm Problem.

The calculations that are performed to generate a message signature are well known and are not described in the present description as the invention aims at improving the signature verification on the receiver 110 side.

The ECDSA signature verification requires the following calculations to be performed, considering the signature (r,s) of the message m being received from the transmitter 120, the transmitter 120 being associated with the public key Q, such that Q=d.G, d being the secret key of the transmitter 120 that is known by the transmitter only:

1) verify that r and s are in the correct interval [1, n-1];
2) Compute e=H[m], H[.] being a predetermined hash function;
3) Compute $w=s^{-1} \bmod n$; wherein $s^{-1}$ is computed by applying the inverse operation to s, and wherein "mod" is the modulo operation;
4) Compute $u_1$= e.w mod n;
5) Compute $u_2$= r.w mod n;
6) Compute R= $(x_R, y_R)$ = $u_1$.G + $u_2$.Q; if R=0, then the signature verification is failed;
7) Compute v= $x_R$ mod n;
8) Verify that r = v. If so, the signature is valid, else the signature verification is failed.

The invention enables to reduce the computational cost of calculation 6, named double point multiplication in what follows.

As explained in introduction, the double point multiplication may be calculated based on double-and-add with regular Jacobian addition and doubling, which however involves a high computational cost.

In order to avoid the computation of inverses, it is known to use Jacobian coordinates, in which a finite point (x,y) of the elliptic curve, is represented by a triplet of coordinates (X; Y; Z) with $x=X/Z^2$ and $y=Y/Z^3$, the curve equation becoming: $Y^2 = X^3 + aXZ^4 + bZ^6$. Co-Z functions have been defined to simplify point additions on two points having the same Z in Jacobian coordinates.

Co-Z functions are already used during signature generation as only two points are used to generate the signature, and Co-Z functions integrate update mechanisms. In this context, Co-Z functions can be efficiently used with Montgomery Ladder scalar multiplication.

However, Co-Z functions are not used during signature verification in the prior art, because, during a double point multiplication, there are strictly more than two points for which Z needs to be maintained equal (base point G, public key Q, sum G+Q and the accumulating variable named Acc in what follows).

Some Co-Z functions are described in the document "Scalar Multiplication on Weierstrass Elliptic Curves from Co-Z Arithmetic", Goundar et Al, Journal of Cryptographic Engineering Vol. 1 Num. 2, 2011.

For example, a Co-Z point addition with update function is named Co-Z ZADDU.

The Co-Z ZADDU function, upon reception of a first point P1 ($X_{P1}$; $Y_{P1}$; Z) and a second point P2 ($X_{P2}$; $Y_{P2}$; Z), returns P1+P2 (Xs; Ys; Z') and P1($X_{P1}$'; $Y_{P1}$'; Z'), with Z' being the updated Co-Z coordinate. This calculation requires only 7 multiplications, which is less than a regular Jacobian addition.

A CoZ ZADDC function is also defined to calculate both point addition and point difference, with update of the Z coordinate.

Co-Z ZADDC function, upon reception of the first point P1 ($X_{P1}$; $Y_{P1}$; Z) and the second point P2 ($X_{P2}$; $Y_{P2}$; Z) returns P1+P2 (Xs; Ys; Z') and P1-P2 ($X_T$; $Y_T$; Z'). This calculation requires only 9 multiplications, which is less than regular Jacobian addition.

Other Co-Z functions may be defined such as :

- ZDAU, which is a Co-Z double and add function with update, which receives P1 and P2 and returns 2*P1+P2 and P2' with an updated Z coordinate;
- ZDA, which is a Co-Z double and add function without update (which has therefore a lower computational cost of 2 multiplications compared to ZDAU);
- DBLU, which is a double operation with update, which receives P1 and returns 2P1 and an updated value of the variable AZ4 described in what follows.

Another function is DBL, which is a double function, which receives P1 and returns 2P1, without updating the Z coordinate of 2P1 to make it equal to the Z coordinate of P1.

The method according to the invention enables to use Co-Z functions to perform double point multiplication (operation 6 previously described) during ECDSA signature verification.

According to the invention, a modified ZADDU function, named Mod_ZADDU, can be defined so that it is configured for receiving P1($X_{P1}$, $Y_{P1}$) and P2 ($X_{P2}$, $Y_{P2}$) and for outputting P1', P2', P3=(P1+P2), Z and $aZ^4$, with P1'=($X_{P1}$', $Y_{P1}$', Z), P2'=($X_{P2}$', $Y_{P2}$', Z) and P3=($X_{P3}$, $Y_{P3}$, Z).

$aZ^4$ is used in several functions and can be stored in a register according to the invention, as described in what follows, a being the parameter of the elliptic curve previously described. In particular, $aZ^4$ is used for the DBL and DBLU functions.

An example of algorithm for executing Mod_ZADDU is given hereafter, for illustrative purpose :

T2 ← $X_{P1}$-$X_{P2}$;
T1 ← $Y_{P1}$-$Y_{P2}$;
T3 ← $Y_{P1}$+$Y_{P2}$;
if T2=0 and T1 =0 then P3 +- DBLU(P1);
else if T2=0 and T3=0 then P3 ← O (O being infinite in what follows);
end if;
Z← $X_{P1}$ - $X_{P2}$;
T2 <- Z * Z;
AZ4 ← T2 * T2 (AZ4 designates the variable used to store the value of $aZ^4$)

AZ4 ← AZ4 * a;
$X_{P1}$ ← $X_{P1}$ * T2;
$X_{P2}$ ← $X_{P2}$ * T2;
T2 ← T1 * T1;
T3 ← $X_{P1}$ - $X_{P2}$;
T4 ← $X_{P1}$ + $X_{P2}$;
$X_{P3}$ ← T2 - T4;
T4 ← $X_{P1}$ - $X_{P3}$;
$Y_{P1}$ ← $Y_{P1}$ * T3;
$Y_{P2}$ ← Y2 * T3;
$Y_{P3}$ ← T1*T4;
$Y_{P3}$ ← $Y_{P3}$ - Y1;
$X_{P1}$' ← $X_{P1}$;
$Y_{P1}$' ← $Y_{P1}$;
$X_{P2}$' ← $X_{P2}$;
$Y_{P2}$' ← $Y_{P2}$.

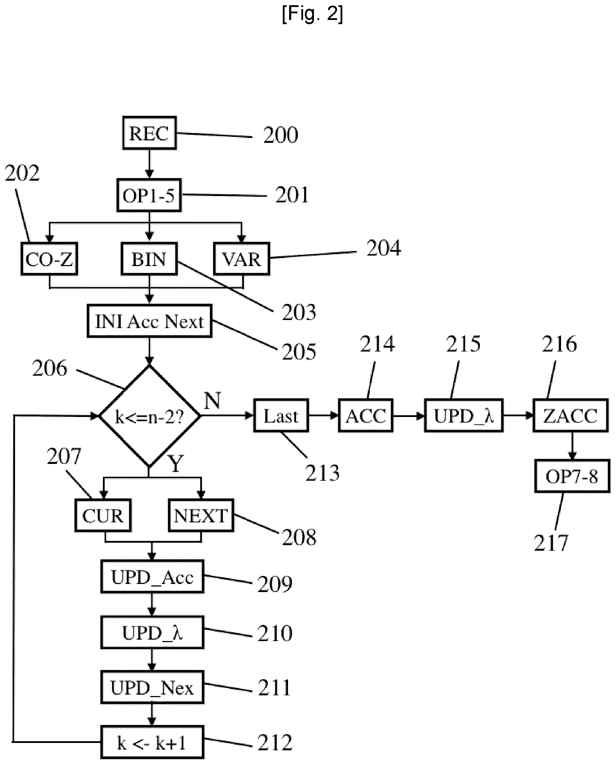

Figure 2 shows the steps of a method for performing an ECDSA signature verification, according to some embodiments of the invention.

The method can be implemented in the receiver 110 described with reference to figure 1, in particular in the verification module 111.

At a step 200, the verification module 111 receives a message m and a signature (r,s) to be verified, from the transmitter 120.

At a step 201, operations 1) to 5) that have been previously described, are performed by the verification module 111, which enables to obtain the two scalars $u_1$ and $u_2$. During operations 1) to 5) the public key point Q is represented with the following coordinates $(X_Q; Y_Q)$ as previously described. The following coordinates $(X_G; Y_G)$ are associated with the base point G of the elliptic curve EC.

Following steps 202 to 216, enable to perform the double point multiplication defined as operation 6) above.

At a step 202, the coordinates of G, Q and G+Q are modified so that they are expressed in Jacobian coordinates with a common initial Z coordinate. To this end, the previously described Mod_ZADDU function can be applied to G and Q as inputs, and the Mod_ZADDU function returns G= $(X_G'; Y_G'; Z)$, Q= $(X_Q'; Y_Q'; Z)$, G+Q = (Xs; Ys; Z) and Z. The common initial value of Z can be noted $Z_{initial}$ in what follows. According to some embodiments, the common initial value $Z_{initial}$ can be stored in a backup register of the verification module 111.

At a step 203, the two scalars u1 and u2 are defined in a binary form, u1 comprising bits u1[i] and u2 comprising bits u2[i], for i varying between 0 and n-1.

At a step 204, at least a first scalar variable, noted λ, is initialized. As explained in what follows, the first scalar variable λ enables, according to the invention, to avoid updating, at each calculation step, the Z coordinates of G, Q and G+Q. The current value of Z, noted $Z_{new}$, can be obtained by multiplying the initial value $Z_{initial}$ by the first scalar variable λ.

The first scalar variable λ is initialized to 1, as Z is initially equal to $Z_{initial}$.

Advantageously, according to some embodiments of the invention, a second scalar variable AZ4 is initialized at step 203. AZ4 can be obtained by calculating a*$Z^4$, where a is one of the parameter of the elliptic curve as described above. It is advantageous to maintain an updated value of a*$Z^4$ in the second scalar variable AZ4 as it is used in several functions, in particular the DBL and DBLU functions, and as it allows reducing the computational cost associated with operation 6). The second scalar variable AZ4 can be initialized by calculating a*$Z_{initial}^4$.

A current bit vector current_bit is also initialized as follows: current_bit = (u1[0]; u2[0]).

A next bit vector next_bit is initialized as follows: next_bit = (u1[1]; u2[1]).

The first scalar variable λ, the current bit vector, the next bit vector, and optionally the second scalar variable AZ4, can be stored in registers or in a memory of the verification module 111.

No restriction is attached to the order in which steps 202 to 204 are performed: they can be performed sequentially or in parallel.

At a step 205, the verification module 111 initializes the accumulating variable Acc. The accumulating variable Acc enables to store the result of the calculations performed at each iteration of steps 206 to 212 described in what follows.

The accumulating variable Acc is initialized based on the value of the current bit vector current_bit.

If current_bit = (1, 0), then Acc ← G;

else if current_bit = (0,1) then Acc ← Q;
else if current_bit = (1,1) then Acc ← G+Q.

Also, at step 206, a next point variable, defining the next point to be added to the accumulating variable, and noted Next, is initialized by the verification module 111 based on the value of the next bit vector next_bit.

If next_bit = (1, 0), then Next ← G;

else if next_bit = (0,1), then Next ← Q;
else if next_bit = (1, 1), then Next ← Q+G;
else if next_bit = (0,0), then Next = AZ4.

It is to be noted that AZ4 is not a vector, but a scalar, and can be stored in the first point coordinate or in the second point coordinate of the next point variable Next. This is optional but advantageous because next_bit = (0,0) indicates that the next operation to apply to Acc is the double operation DBL(U).

After the variables Acc and Next are initialized, an index k is initialized to 1 and the method goes on with step 206.

At step 206, the verification module verifies that k is less than or equal to n-2 (which means that the calculation of the double point multiplication is not complete as there is at least one bit of u1 and u2 that have not been used).

If so, that is to say if k is less than or equal to n-2, the method goes to step 207. Else, the method goes to step 213 described hereafter.

At a step 207, the verification module 111 updates the current bit vector current_bit by attributing (u1[k]; u2[k]) to it.

At a step 208, the verification module 111 updates the next bit vector next_bit by attributing (u1[k+1]; u2[k+1]) to it.

At a step 209, the verification module updates the accumulating variable Acc based on the value of the current bit.

If current_bit is different from (0,0) then Acc receives the result of the Co-Z double and add function ZDA (with or without update, as explained in what follows) applied to the variables Acc and Next:

Acc ← ZDA (Acc, Next).

If next_bit = current_bit, the ZDAU function is used to update Acc. This is because the ZDAU (with update) function can directly provide the next point variable Next with an updated value $Z_{new}$ of Z, without the need to use an update function UpdateByLambda that is described in what follows. Else, if next_bit differs from current_bit, the ZDA function (without update) can be used, and the next point variable is updated using the UpdateByLambda function as described in what follows.

Else, if current_bit is equal to (0,0) at step 209, then Acc receives the result of the double function (with or without update, as explained in what follows) applied to the accumulating variable Acc. The double function can be the modified double function described in what follows, receiving the AZ4 value stored in the next point variable Next, which reduces the computational cost of updating Acc.

If next_bit = current_bit, the DBLU function can be used to update Acc during step 209. This is because the DBLU function can additionally provide an updated value of AZ4 which can be stored in the next point variable Next, for use during the next iteration. Else, if next_bit differs from current_bit, the DBL function (without update) described in what follows can be used, and the next point is updated using the UpdateByLambda function as described in what follows.

At a step 210, the first scalar variable λ is updated in memory so that $\lambda.Z_{initial}$ is equal to the current value $Z_{new}$ of the Z coordinate of the accumulating variable Acc, after it has been updated at step 209. Preferably, the modified ZDA, ZDAU, DBL and DBLU functions integrate the update of λ, as the current value of λ can be accessed during execution of each of these functions.

Maintaining the first scalar variable λ updated enables to avoid updating G, Q and G+Q at every iteration between steps 206 and 212, which reduces the computational cost of the double point multiplication operation.

At step 211, the verification module 111 updates the next point variable Next based on the next bit vector next_bit.

If next_bit is equal to (0;0), then Next is updated with the updated value of AZ4, which can be calculated by multiplying AZ4 by $\lambda^4$ (if current_bit is different from (0;0)) or directly by the DBLU function of step 209 (if current_bit = (0;0)).

If current_bit is different from (0;0) and next_bit is equal to current_bit, then the next point variable Next can be directly updated by the ZDAU function, which enables to avoid using the update function UpdateByLambda.

Else, if next_bit is different from current_bit then:

If next_bit is equal to (1;0), then the next point variable Next is updated with the result of the update function UpdateByLambda applied to G, which enables to update the base point G with the current value $Z_{new}$ of the Z coordinate.

If next_bit is equal to (0; 1), then the next point variable Next is updated with the result of the update function UpdateByLambda applied to Q, which enables to update the public key point Q with the current value $Z_{new}$ of the Z coordinate.

If next_bit is equal to (1; 1), then the next point variable Next is updated with the result of the update function UpdateByLambda applied to G+Q, which enables to update the sum G+Q with the current value $Z_{new}$ of the Z coordinate.

Therefore, the following algorithm can be used for implementing steps 206 to 212:

```
for k=1 to n-2 do
current_bit ← (u1[k]; u2[k]);
next_bit ← (u1[k+1]; u2[k+1]);
if current_bit ≠ (0; 0) then Acc ← ZDA(U) (Acc; Next);
(corresponding to steps 209 and 210 because
ZDA(U) may include the update of the first scalar
variable λ; as explained above the function to be
applied among ZDA and ZDAU is selected based on
the value of next_bit)
if next_bit = (0;0) then AZ4 +- AZ4* λ4;
if next_bit = current_bit then Next ← UpdateFromZDAU; (the Update output by the modified ZDAU
function is described in what follows);
else if next_bit = (1;0) then Next ← UpdateByLambda(G);
else if next_bit = (0; 1) then Next ← UpdateByLambda(Q);
else if next_bit = (1; 1) then Next ← UpdateByLambda(G+Q);
end if
else if current_bit = (0; 0) then Acc ← DBL(U) (Acc,
AZ4) (corresponding to steps 209 and 210 because
```

DBL(U) may include the update of the first scalar variable $\lambda$; as explained above, the function to be applied among DBL and DBLU is selected based on the value of next_bit);

if next_bit= (0;0) then AZ4 ← UpdateFromDBLU (the Update output by the modified DBLU function is the updated AZ4 value and is described in what follows; AZ4 can be considered as the next point variable in this case);

else if next_bit = (1; 0) then Next ← UpdateByLambda(G)

else if next_bit = (0; 1) then Next ← UpdateByLambda(Q);

else if next_bit = (1; 1) then Next ← UpdateByLambda (G+Q);

end if.

After step 211, the verification module 111 increments by 1 the index k at a step 212, and the method goes back to step 206 that has been previously described.

When k is equal to n-1 after some iterations of steps 206 to 212, then the method goes to step 213 after the test of step 206 that has been previously described.

At step 213, the verification module 111 attributes next_bit to a last bit vector last_bit:

last_bit ← next_bit.

At a step 214, the verification module 112 updates the accumulating variable Acc based on the last bit vector last_bit.

If last_bit = (0; 0) then Acc ← DBL (Acc; AZ4) (Acc is doubled);

Else, Acc ← ZDA (Acc; Next) (Next corresponds to G, Q or G+Q).

At a step 215, the first scalar variable is updated $\lambda$. As explained above, $\lambda$ can be updated during the execution of DBL or ZDA at step 214.

At a step 216, the current value $Z_{new}$ of the Z coordinate of the accumulating variable is determined by multiplying $Z_{initial}$ by $\lambda$.

Thus, the accumulating variable Acc can be attributed to the value R of the double point multiplication corresponding to operation 6.

The verification module 111 can then perform operations 7 and 8, based on the determined R, to verify the signature, at a step 217.

As explained above, a DBL(U) function can be defined according to the invention, which is arranged to receive a point P and to output 2P. The DBLU (with update) function also outputs an updated value of AZ4.

An example of algorithm to for executing the DBL(U) function, applied to $P1(X_{P1}; Y_{P1}, Z_{P1})$ is given hereafter, for illustrative purpose:

if P1 = O then return O;
end if;

$T1 \leftarrow Y_{P1} + Y_{P1}$;
$T2 \leftarrow X_{P1} * X_{P1}$;
$T3 \leftarrow T1 * T1$;
$T4 \leftarrow T3 * X_{P1}$;
$X_{P1} \leftarrow AZ4 + T2$; (using variable AZ4 defined above, else calculating $a*Z^4$);
$XP1 \leftarrow X_{P1} + T2$;
$T2 \leftarrow X_{P1} + T2$;
$X_{P1} \leftarrow T2 * T2$;
$\lambda \leftarrow \lambda * T1$;
$T1 \leftarrow T1 * T3$;
$T1 \leftarrow T1 * Y_{P1}$;
$X_{P1} \leftarrow X_{P1} - T4$;
$X_{P1} \leftarrow X_{P1} - T4$;
$T4 \leftarrow T4 - X_{P1}$;
$T4 \leftarrow T4 * T2$;
$YP1 \leftarrow T4 - T1$;
if Update then (if the DBL(U) function is DBLU)
AZ4 <-- AZ4 * T1;
AZ4 <-- AZ4 + AZ4;
end if.

As explained above, a double and add function ZDA(U) can be defined, which is arranged to receive a first point $P1(X_{P1}; Y_{P1}, Z_{P1})$ and a second point $P2 (X_{P2}; Y_{P2}; Z_{P2})$ and to output $P1'= 2.P + Q$. If the function ZDA(U) is ZDAU (with update), then it also outputs P2', which is P2 with the same Z as P1'

The function ZDA(U) proceeds in two stages: ZADDU then ZADDC.

An example of algorithm to for executing the ZDA(U) function, applied to the first point $P1(X_{P1}; Y_{P1}, Z_{P1})$ and to the second point $P2 (X_{P2}; Y_{P2}; Z_{P2})$, is given hereafter, for illustrative purpose:

if P1 =O and P2 = 0 then return 0
end if
(ZADDU stage:)
if P1=O then
$P1 \leftarrow P2$;
$P2 \leftarrow O$;
if P2 has already an updated Z coordinate (because P2 is output from the DBLU function at the previous iteration) then $\lambda \leftarrow 1$
end if;
else if P2=O then $P2 \leftarrow P1$;
else (P1 and P2 are different from O)
$T1 \leftarrow X_{P1} - X_{P2}$;
$T3 \leftarrow Y_{P1} + Y_{P2}$;
$T2 \leftarrow Y_{P1} - Y_{P2}$;
if T1 = 0 and T3=0 (it means that P1=-P2) then $P1 \leftarrow$ O and $P2 \leftarrow P1$;
else if T1 = 0 and T2=0 (it means that P=Q) then $P \leftarrow$ DBLU (P);
else
$\lambda \leftarrow \lambda*T1$;
$T1 \leftarrow T1*T1$;
$Y_{P2} \leftarrow X_{P2} * T1$;

$X_{P2} \leftarrow X_{P1} * T1;$
$X_{P1} \leftarrow X_{P1} - X_{P2};$
$X_{P1} \leftarrow X_{P1} - X_{P2};$
$YP2 \leftarrow XP2 - YP2;$
$T1 \leftarrow XP2 - XP1;$
$YP2 \leftarrow YP2*YP1;$
$YP1 \leftarrow T1*T2;$
$YP1 \leftarrow YP1 - YP2;$
end if
(ZADDC stage)
if P1=O then
$P1 +- P2;$
$P2 +- -P2;$
else if P2=O then
if Update (if ZDA(U) is ZDAU) then $P2 +- P1;$
end if
else
$T2 \leftarrow X_{P1} - X_{P2};$
$T3 \leftarrow Y_{P1} + Y_{P2};$
$T1 \leftarrow Y_{P1} - Y_{P2};$
if T2 = 0 and T3= 0 (meaning that P1= -P2) then
if Update then $P2 +- DBLU(P1);$
else $\lambda \leftarrow 1;$
end if
$P1 +- O;$
else if T2=0 and T1=0 (meaning that P1=P2) then
$P1 +- DBLU(P1);$
if Update then $P2 \leftarrow O;$
end if
else
$\lambda \leftarrow \lambda*T2;$
$T2 \leftarrow T2*T2;$
$X_{P1} \leftarrow X_{P1}*T2;$
$X_{P2} \leftarrow X_{P2}*T2;$
$T2 \leftarrow T1*T1;$
$T3 \leftarrow Y_{P2} + Y_{P1};$
$Y_{P2} \leftarrow X_{P1} - X_{P2};$
$Y_{P2} \leftarrow Y_{P2}*Y_{P1};$
$Y_{P1} \leftarrow X_{P1};$
$X_{P1} \leftarrow T2 - Y_{P1};$
$X_{P1} \leftarrow X_{P1} - X_{P2};$
if Update then
$T2 \leftarrow X_{P1} + Y_{P1};$
$X_{P2} \leftarrow T3*T3;$
$X_{P2} \leftarrow X_{P2} - T2;$
$T2 \leftarrow Y_{P1} - X_{P2};$
$Y_{P1} \leftarrow Y_{P1} - Y_{P2};$
$Y_{P2} \leftarrow T3 - Y_{P2};$
else
$Y_{P1} \leftarrow Y_{P1} - X_{P1};$
$Y_{P1} \leftarrow Y_{P1}*T1;$
$Y_{P1} \leftarrow Y_{P1} - Y_{P2};$
end if; end if; end if; end if.

Then, the ZDA function returns $(X_{P1}; Y_{P1})$, which corresponds to 2.P1+P2 and the ZDAU returns $(X_{P1}, Y_{P1})$, which corresponds to 2.P1 +P2, and $(X_{P2}; Y_{P2})$, which corresponds to P2'.

The update function UpdateByLambda enables to update the point G, Q or G+Q having the initial value $Z_{initial}$ of the Z coordinate, to replace it with the current value $Z_{new}$ of the Z coordinate (the current value $Z_{new}$ being the Z coordinate of the accumulating variable Acc).

An example of algorithm to execute the update function is given hereafter for illustrative purposes. The function UpdateByLambda receives a point P1 =$(X_{P1}; Y_{P1}; Z)$ as input and returns P1'=$(X_{P1}'; Y_{P1}'; Z* \lambda)$.

$T1 \leftarrow \lambda* \lambda;$
$X_{P1}' \leftarrow X_{P1}*T1 ;$
$T1 \leftarrow T1* \lambda;$
$Y_{P1}' \leftarrow Y_{P1} * T1.$

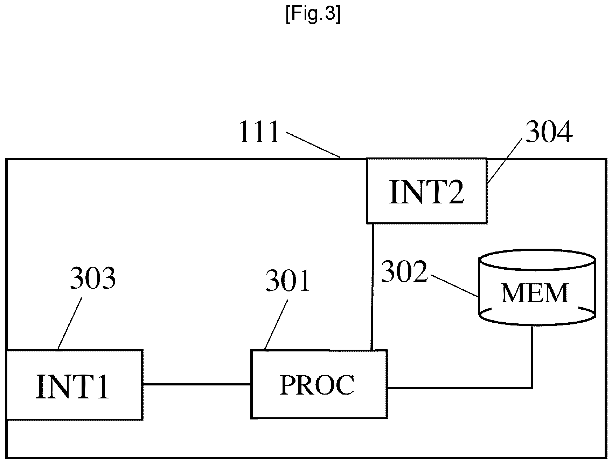

Figure 3 shows the structure of the verification module 111 according to some embodiments of the invention.

The verification module 111 comprises a processor 301 and a memory 302.

The processor 301 may comprise one or multiple microprocessors, a Central Processing Unit (CPU), on a single Integrated Circuit (IC) or several IC chips.

No restriction is attached to the memory 302, which may be any non-transient, tangible form of memory. For example, it can comprise ROM, RAM, EEPROM and/or flash memory. The processor 301 may be programmable and may be configured to execute instructions that are stored in its internal memory or to execute instructions that are stored in the memory 302.

The memory 302 can store instructions for implementing the steps 200 to 216 described above.

The verification module 111 further comprises a first interface 303 configured to receive the message and the ECDSA signature at step 200

The verification module 111 further comprises a second interface 304 configured to output a verification result of the ECDSA signature, the verification result indicating whether the ECDSA signature is valid or not.

The embodiments are described in sufficient detail to enable those of ordinary skill in the art to embody and implement the systems and processes herein described. It is important to understand that embodiments can be provided in many alternate forms and should not be construed as limited to the examples set forth herein.

**Claims**

1. A method for verifying an ECDSA signature of a message in a cryptographic system (100) based on an elliptic curve, the method comprising determining a point R on the elliptic curve, the point R being defined by u1*G+u2*Q, wherein G is a base point of the elliptic curve, Q is a public key point, u1 and u2 are scalar determined based on the ECDSA signature and the message, wherein u1 is expressed as a series of n bits u1[k] and u2 is expressed as a series of n bits u2[k], index k varying between 0 and n-1, wherein determining the point R comprises the following steps:

- determining (202) Jacobian coordinates for G, Q and G+Q with a common initial value $Z_{initial}$ of a Z coordinate;
- initializing (204) a first scalar variable $\lambda$ to 1;
- initializing (204) an accumulating variable as a point of the elliptic curve being G, Q or G+Q;

and iterating the following steps for index k varying between 1 and n-2 :

- updating (209) the accumulating variable by applying a function to a previous value of the accumulating variable obtained during a previous iteration, the function being selected based on u1[k] and u2[k] among a set of predefined functions comprising at least one Co-Z function ;
- updating (210) the first scalar variable $\lambda$ so that a current value of the Z coordinate of the accumulating variable is equal to the common initial value $Z_{intiial}$ multiplied by the first scalar variable;
- incrementing (212) k by 1.

2. The method according to claim 1, wherein the set of predefined functions comprises one or several of the following functions:

- a double function without update, arranged for receiving a point P as input and to output 2*P on the elliptic curve;
- a double function with update, arranged for receiving a point P as input and to output 2*P on the elliptic curve and to output a second scalar variable AZ4 equal to $a*Z_{new}^4$, wherein a is a parameter of the elliptic curve and $Z_{new}$ is a Z coordinate of 2*P;
- a double and add function without update, arranged for receiving a first point P1 and a second point P2, and to output 2*P1 + P2 on the elliptic curve;
- a double and add with update function, arranged for receiving a first point P1 and a second point P2, and to output 2*P1 + P2 and P2' on the elliptic curve, P2' being the same point as P2 on the elliptic curve and having the same Z coordinate as 2*P1+P2.

3. The method according to claim 2, wherein if u1[k] and u2[k] are equal to 0 then the selected function is the double function with update or the double function without update, and else, the selected function is the double and add function with update or the double function without update.

4. The method according to claim 3, wherein if u1[k] and u2[k] are equal to 0 and if u1[k+1] and u2[k+1] are also equal to 0, then the selected function is the double function with update.

5. The method according to claim 3 or 4, wherein if one of u1[k] and u2[k] at least is different from 0, if u1[k] is equal to u1[k+1] and if u2[k] is equal to u2[k+1], then the selected function is the double and add function with update.

6. The method according to claim one of the preceding claims, wherein, at each iteration of index k, the method comprises, before incrementing (212) k by 1, determining (211) a next point variable based on u1[k+1] and u2[k+1];
wherein the accumulating variable is determined (209) by applying the selected function to the previous value of the accumulating variable and to the next point variable determined at the previous iteration.

7. The method according to claim 6, wherein determining (211) the next point variable based on u1[k+1] and u2[k+1] comprises, if at least one of u1[k+1] and u2[k+1] is different from 0, selecting a next point among at least G, Q and G+Q, and updating the next point based on the first scalar variable $\lambda$, so the Z coordinate of the next point is equal to the common initial value $Z_{intiial}$ multiplied by the first scalar variable $\lambda$, the next point variable being the updated next point.

8. The method according to claims 6 or 7, wherein if u1[k+1] and u2[k+1] are both equal to 0, then the next point variable comprises a second scalar variable AZ4 equal to $a*Z_{new}^4$, wherein a is a parameter of the elliptic curve and $Z_{new}$ is calculated by multiplying $Z_{initial}$ by the first scalar variable $\lambda$.

9. The method according to claim 6, 7 or 8, wherein if u1[k+1]=u1[k] and u2[k+1]=u2[k], then the next point variable is output by the function selected based on u1[k] and u2[k].

10. The method according to further comprising storing (202) the initial common value $Z_{initial}$ in a backup register.

11. A computer program comprising instructions arranged for implementing the method according to one of claims 1 to 10, when said instructions are executed by a processor (301).

12. A verification module (111) comprising an interface (303) arranged for receiving a message and an ECDSA signature and a processor (301) configured for determining a point R on an elliptic curve, the point R being defined by u1*G+u2*Q, wherein G is a base point of the elliptic curve, Q is a public key point, u1 and u2 are scalar determined based on the ECDSA signature and the message, wherein u1 is expressed as a series of n bits u1[k] of index k and u2 is expressed as a series of n bits u2[k] of index k, k varying between 0 and n-1,

wherein, in order to determine the point R comprises, the processor is configured for:

- determining Jacobian coordinates for G, Q and G+Q with a common initial value $Z_{initial}$ of a Z coordinate;
- initializing a first scalar variable $\lambda$ to 1;
- initializing an accumulating variable as a point of the elliptic curve being G, Q or G+Q;

and iterating the following steps for an index k varying between 1 and n-2 :

- updating the accumulating variable by applying a function to a previous value of the accumulating variable obtained during a previous iteration, the function being selected based on u1[k] and u2[k] among a set of predefined functions comprising at least one Co-Z function ;
- updating the first scalar variable $\lambda$ so that a current value of the Z coordinate of the accumulating variable is equal to the common initial value $Z_{intiial}$ multiplied by the first scalar variable;
- incrementing k by 1.

13. A cryptographic system (100) comprising a receiver (110) and a transmitter (120), wherein the transmitter comprises a signature generation module (121), configured for receiving a message and for generating an ECDSA signature based on the message, wherein the transmitter is configured to transmit the message and the generated ECDSA signature to the receiver, and wherein the receiver comprises a verification module (111) according to claim 12.

[Fig. 1]

[Fig. 2]

[Fig.3]

| | Europäisches Patentamt European Patent Office Office européen des brevets | **EUROPEAN SEARCH REPORT** | Application Number EP 24 30 6730 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TORU AKISHITA: "Fast Simultaneous Scalar Multiplication on Elliptic Curve with Montgomery Form", ELECTRONIC PUBLISHING, ARTISTIC IMAGING, AND DIGITAL TYPOGRAPHY; [LECTURE NOTES IN COMPUTER SCIENCE , ISSN 0302-9743], SPRINGER VERLAG, DE, vol. 2259, 1 January 2001 (2001-01-01), pages 255-267, XP007902287, ISBN: 978-3-540-24128-7 * Section 2-3 * ----- | 1-13 | INV. G06F7/72 H04L9/32 |
| A | HAMILTON MARK ET AL: "Implementation of a secure TLS coprocessor on an FPGA", MICROPROCESSORS AND MICROSYSTEMS, vol. 40, 1 January 2016 (2016-01-01), pages 167-180, XP029374561, ISSN: 0141-9331, DOI: 10.1016/J.MICPRO.2015.10.009 * Section 6, Appendix A * ----- | 1-13 | |
| A,D | GOUNDAR RAVEEN R. ET AL: "Scalar multiplication on Weierstraß elliptic curves from Co-Z arithmetic", JOURNAL OF CRYPTOGRAPHIC ENGINEERING, vol. 1, no. 2, 1 August 2011 (2011-08-01), pages 161-176, XP093256317, Berlin/Heidelberg ISSN: 2190-8508, DOI: 10.1007/s13389-011-0012-0 Retrieved from the Internet: URL:http://link.springer.com/article/10.1007/s13389-011-0012-0/fulltext.html> * Section 2-5 * ----- -/-- | 1-13 | TECHNICAL FIELDS SEARCHED (IPC) G06F H04L |

The present search report has been drawn up for all claims

| Place of search | Date of completion of the search | Examiner |
|---|---|---|
| Munich | 7 March 2025 | Prins, Leendert |

EPO FORM 1503 03.82 (P04C01)

page 1 of 2

**EP 4 730 104 A1**

## EUROPEAN SEARCH REPORT

**Application Number**

EP 24 30 6730

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AYDOS M ET AL: "HIGH-SPEED IMPLEMENTATION OF AN ECC-BASED WIRELESS AUTHENTICATION PROTOCOL ON AN ARM MICROPROCESSOR", IEE PROCEEDINGS : COMMUNICATIONS, INSTITUTION OF ELECTRICAL ENGINEERS, GB, vol. 148, no. 5, 1 October 2001 (2001-10-01), pages 273-279, XP001107959, ISSN: 1350-2425, DOI: 10.1049/IP-COM:20010511 * Section 2-3 * ----- | 1-13 | |
| | | | **TECHNICAL FIELDS SEARCHED (IPC)** |

The present search report has been drawn up for all claims

| Place of search | Date of completion of the search | Examiner |
|---|---|---|
| Munich | 7 March 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GOUNDAR et al.** Scalar Multiplication on Weierstrass Elliptic Curves from Co-Z Arithmetic. *Journal of Cryptographic Engineering*, 2011, vol. 1 (2)